# EUROPÄISCHE PATENTSCHRIFT

(11) **EP 2 008 785 B1**
(45) Veröffentlichungstag und Bekanntmachung des Hinweises auf die Patenterteilung: **05.01.2011**
(21) Anmeldenummer: 07075525.1
(22) Anmeldetag: 27.06.2007
(51) Int. Cl.: B29B 9/14, B01J 2/14, D04H 1/72, D04H 1/70

(54) **Verfahren und Vorrichtung zur kontinuierlichen Herstellung von Faseragglomeraten**
Method and device for continuous manufacture of fibre agglomerates
Procédé et dispositif destinés à la fabrication continue d'agglomérats de fibres

(43) Veröffentlichungstag der Anmeldung: 31.12.2008
(73) Patentinhaber: Brandenburgische Technische Universität Cottbus, 03046 Cottbus (DE)
(72) Erfinder: Ay, Peter, 06369 Schortewitz (DE); Perwin, Jörg, 15926 Luckau (DE); Gusovius, Hans-Jörg, 15749 Mittenwalde (DE); Hildebrandt, Sven, 24536 Neumünster (DE)
(74) Vertreter: Schubert, Klemens

(56) Entgegenhaltungen:
- DE-A1- 10 358 245
- US-A- 5 429 783

## Beschreibung

Die Erfindung betrifft ein Verfahren und eine Vorrichtung zur kontinuierlichen Herstellung von Faseragglomeraten in Form im Wesentlichen kugelförmiger, zylinderförmiger oder ellipsoider Pellets. Sie bezieht sich auf die Herstellung derartiger Pellets aus Fasern, die mittels eines Rollverfahrens in die entsprechende Form gebracht werden, ohne dass hierbei das Hinzufügen eines Haftmittels erforderlich ist.

Steigende Preise für klassische Rohstoffe, aber auch Erfordernisse des Umweltschutzes haben in der jüngeren Zeit zu einem verstärkten Einsatz nachwachsender Rohstoffe bei hochwertigen Industriegütern geführt. Eine erhebliche Verbreitung haben dabei bereits mit Naturfasern verstärkte Kunststoffe (NFK) gefunden. Sie werden mit immer noch steigender Tendenz, insbesondere im Fahrzeugbau eingesetzt, wo sie neben einer Reduzierung des Gewichts der Fahrzeuge zu einer besseren Recyclebarkeit einzelner Fahrzeugkomponenten und einer Verminderung ihres Splitterrisikos bei Materialbruch führen.

Zum überwiegenden Teil erfolgt dabei die Herstellung, insbesondere von Komponenten des Fahrzeuginnenraums, im Wege des Formpressens. Hierbei wird ein Halbzeug in Form eines Naturfaservlieses oder Naturfaserfilzes in einer Form unter Druck und erhöhter Temperatur mit dem jeweiligen Kunststoff verpresst. Naturfasern können auf diesem Wege in eine thermoplastische Matrix eingebracht werden. Allerdings ist die unter dem Einsatz von Formpressverfahren realisierbare Formenvielfalt relativ begrenzt. Im Hinblick auf die Formenvielfalt sind dagegen Spritzgießverfahren von Vorteil, welche zudem in der Regel produktiver als Formpressverfahren sind. Zum Einbringen von Naturfasern in Kunststoffspritzgießsteile wird zunächst aus dem meist granulierten Kunststoff und den in Form von Bänden, beispielsweise Kardenbändern, oder in Form von Garnen oder Mehl vorliegenden Naturfasern durch Extrudieren ein Compoundmaterial erzeugt, aus welchem dann durch Anwendung der Spritzgießtechnik entsprechende Formteile hergestellt werden können. Seitens der Hersteller von Compoundmaterialien wäre dabei eine Bereitstellung des Naturfasermaterials in Form von Pellets mit einer zu dem granulierten Kunststoff vergleichbaren Form wünschenswert. Als Naturfasern werden unter anderem Flachs, Jute, Bast und Hanf eingesetzt. Diese gilt es, in die von den Herstellern der Compoundmaterialien gewünschte Form und Dichte zu bringen.

Aus der DE 197 56 126 A1 ist ein Verfahren bekannt, bei dem Hybridbänder aus einer Fasermischung von Verstärkungs- und Matrixfasern hergestellt und diese Hybridbänder unmittelbar einer Schnecken-Kolbenspritzgießmaschine zugeführt werden. Hier wird das Material im Zylinder plastifiziert und anschließend in ein temperiertes Werkzeug eingespritzt.

Die DE 100 32 804 A1 offenbart ein Verfahren, nach welchem Naturfasern gereinigt, gekürzt und mit Zusätzen auf thermoplastischer Werkstoffbasis zu Pellets verpresst werden. Als nachteilig ist es hierbei anzusehen, dass dabei die Faserlänge der Naturfasern stark reduziert wird, was zudem eine erhebliche mechanische Beanspruchung der Naturfasern mit sich bringt. Zur Vermeidung dieser Nachteile schlägt die DE 103 58 245 A1 ein Verfahren gemäß dem Oberbegriff des Anspruchs 1 und eine Einrichtung gemäß dem Oberbegriff des Anspruchs 7 vor, mittels welcher aus Naturfasern mit relativ großer Länge oder aus auf Naturfasern basierenden gestaltlosen plastischen Massen im Zuge eines Rollvorgangs ohne den Einsatz zusätzlicher Haftmittel Agglomerate in Form von Pellets bestimmter beziehungsweise vorgegebener Porosität hergestellt werden. Das Naturfasermaterial wird dazu portioniert in einen zwischen einer feststehenden und einer rotierenden Scheibe ausgebildeten und hinsichtlich der Durchmesser der Scheiben seitlich durch von deren Oberflächen aufragende Stege begrenzten Rollgang eingebracht. Im Ergebnis einer vollständigen Umdrehung der in Rotation versetzten Scheibe entsteht aus der eingebrachten Portion des Fasermaterials aus den sich dabei ineinander verhakenden Fasern ein Agglomerat, welches hinsichtlich seiner Form durch die Geometrie des Rollgangs und hinsichtlich seiner Größe durch die aufgegebene Portion des Fasermaterials bestimmt wird.

Bei dem in der letztgenannten Schrift dargestellten Verfahren handelt es sich aber, insbesondere durch das für die Zuführung zum Rollgang manuell portionierte Fasermaterial, um ein diskontinuierliches Verfahren, welches zudem aufgrund der Gestaltung der beschriebenen Einrichtung nicht für die großtechnische Erzeugung größerer Mengen entsprechender Pellets geeignet ist.

Aufgabe der Erfindung ist es, eine Lösung bereitzustellen, die es ermöglicht, Rollagglomerate aus Naturfasern ohne den Zusatz von Haftmitteln in einem kontinuierlichen beziehungsweise quasi kontinuierlichen Prozess in großer Menge herzustellen.

Die Aufgabe wird durch ein Verfahren mit den Merkmalen des Anspruchs 1. gelöst. Eine die Aufgabe lösende und zur Durchführung des Verfahrens geeignete Vorrichtung ist durch die Merkmale des Anspruchs 7charakterisiert. Vorteilhafte Aus- beziehungsweise Weiterbildungen der Erfindung sind durch die jeweiligen Unteransprüche gegeben.

Nach dem zur kontinuierlichen Herstellung von Faseragglomeraten vorgeschlagenen Verfahren wird zur Herstellung eines Agglomerats eine Portion des Fasermaterials in einen, abgesehen von mindestens einer Eintrittsöffnung und mindestens einer Austrittsöffnung, allseitig geschlossenen, kreisringförmigen Rollgang eingebracht. Die in den Rollgang eingebrachte Portion des Fasermaterials wird aufgrund einer von einander gegenüberliegenden, den Rollgang begrenzenden Flächen zueinander vollzogenen Relativbewegung durch den Rollgang hindurch transportiert. Dabei wird das Fasermaterial, wie aus dem Stand der Technik bereits bekannt, in dem Rollgang verdichtet und schließlich aus einer Austrittsöffnung des Rollgangs als Faseragglomerat ausgetragen. Erfindungsgemäß erfolgt die Portionierung des Fasermaterials durch das Herausreißen einer Menge von Fasern aus einem Vorrat des entsprechenden Materials. Hierzu werden jeder Eintrittsöffnung eines aus den sich permanent zueinander bewegenden Flächen gebildeten Rollgangs ein Vorrat des Fasermaterials auf einem Vorlagetisch vorgelegt und von wiederholt durch den Vorrat bewegten Mitnahmemitteln einer dazu ausgebildeten Reißeinrichtung fortlaufend Portionen aus dem Vorrat herausgerissen und in den jeweiligen Rollgang abgegeben, wobei je Eintrittsöffnung ein gemeinsamer Vorlagetisch für Rollgänge vorgesehen ist. Es hat sich überraschend gezeigt, dass mit dieser Reißtechnik bei einer entsprechenden Ausbildung der dazu verwendeten, später noch zu erläuternden Vorrichtung, hinsichtlich der Menge relativ konstante Portionen dem oder den Rollgängen kontinuierlich zugeführt werden können. Zudem konnte in Versuchen belegt werden, dass die zuvor geschilderte Reißtechnik sowohl auf Karden eines Fasermaterials als auch auf Ballen von in Faserwirrlage vorliegenden Fasern angewendet werden kann. Dazu ist zu bemerken, dass der Verwendung von Fasern in Wirrlage im Allgemeinen der Vorzug zu gegeben ist, da hierbei eine aufwändige Vorverarbeitung des Fasermaterials beziehungsweise Vorbehandlungsprozesse zum Erhalt von Fasermaterial mit einer gezielten Faserorientierung entfallen können. Dabei ist es als ein wesentlicher Vorteil des erfindungsgemäßen Verfahrens anzusehen, dass dessen Gestaltung überhaupt erst den Verzicht auf eine entsprechende Vorbehandlung des Naturfasermaterials ermöglicht und dabei dennoch eine relativ genaue Portionierung des Materials gegeben ist, so dass bei der Agglomeration Pellets mit gut reproduzierbaren Eigenschaften im Hinblick auf Form Größe und Porosität erhältlich sind.

Allerdings ist aber die jeweils verwendete Form des Faservorrats gegebenenfalls auch abhängig von der Art des Fasermaterials, oder davon, ob die Fasern später in dem zu bildenden Agglomerat beziehungsweise Pellet eine bestimmte Orientierung haben sollen. Im Falle einer Verwendung von dem Vorlagetisch ständig zugeführten Karden des Fasermaterials sind dessen Fasern innerhalb der Karden quer zur Rollgangsrichtung ausgerichtet. Im Hinblick auf die angestrebte Kontinuierlichkeit des Prozesses ist es dabei dem Fachmann ohne weiteres an die Hand gegeben, Maßnahmen zu ergreifen die es gewährleisten, dass auf dem genannten Vorlagetisch ständig ein Mindestvorrat des Fasermaterials als Karde(n) oder Ballen mit Fasern in Wirrlage zur Verfügung steht.

Im Hinblick auf das Rollergebnis und den Zusammenhalt der erzeugten Agglomerate kann das Verfahren vorteilhaft so gestaltet werden, dass das portionierte Fasermaterial vor dem Eintritt in den Rollgang oder während des Rollprozesses im Rollgang befeuchtet wird. Gemäß praxisrelevanter Weiterbildungen des Verfahrens können dem portionierten Fasermaterial zudem vor dem Eintritt in den Rollgang oder innerhalb des Rollgangs Zusatzstoffe zudosiert werden. In Betracht kommen dabei unter anderem Haftvermittler und/oder Flammhemmer und/oder Fungizide.

Die erfindungsgemäße, zur Durchführung des Verfahrens geeignete Vorrichtung zur kontinuierlichen Herstellung von Faseragglomeraten besteht aus einer Faseraufgabeeinrichtung und wenigstens einem, abgesehen von mindestens einer Eintrittsöffnung und mindestens einer Austrittsöffnung, allseitig von Begrenzungsflächen eingefassten, kreisringförmigen Rollgang. In diesem Rollgang werden Portionen des Fasermaterials durch die Walkwirkung einander gegenüberliegender und mittels eines Antriebs zueinander relativ bewegter Begrenzungsflächen des Rollgangs jeweils zu einem Faseragglomerat verdichtet. Die Faseraufgabeeinrichtung der erfindungsgemäßen Vorrichtung besteht aus einem vor einer Eintrittsöffnung eines oder mehrerer Rollgänge der Vorrichtung angeordneten gemeinsamen Vorlagetisch mit einer Auflagefläche für einen Faservorrat und mindestens einer, von dem Antrieb des oder der Rollgänge oder einem separaten Antrieb getriebenen rotierenden Reißscheibe. Die Reißscheibe ist als eine flache Scheibe mit mindestens einem an ihrem Außenumfang aufragenden Reißzahn ausgebildet. Dieser Reißzahn kämmt bei der Rotation der Reißscheibe durch über den Vorlagetisch hinausragende Fasern des Vorrats oder bewegt sich über mindestens eine an dem Vorlagetisch für die Reißscheibe ausgebildete Ausnehmung durch die darauf liegenden Fasern des Vorrats. Dabei ist die mindestens eine Reißscheibe so angeordnet, dass in einer Arbeitsstellung der Vorrichtung ein Segment der Reißscheibe in die ihr zugeordnete Eintrittsöffnung des Rollgangs hineinragt und die von dem mindestens einem Reißzahn der Reißscheibe während ihrer Rotation, das heißt beim Passieren des Vorlagetisches mitgenommene Faserportion beim späteren Passieren der betreffenden Eintrittsöffnung in den Rollgang abgegeben wird.

Gemäß einer bevorzugten Ausbildungsform der zuvor beschriebenen erfindungsgemäßen Vorrichtung ragt der mindestens eine auf dem Außenumfang der Reißscheibe angeordnete Reißzahn bezüglich der Reißscheibe in radialer Richtung von dieser auf.

Eine praxisgerechte Ausbildungsform der erfindungsgemäßen Vorrichtung ist mit zwei oder mehr Rollgängen und mit einer Aufgabeeinrichtung ausgebildet. Dabei sind die Rollgänge durch einen sich in einem Stator bewegenden Rotor gebildet. Der Rotor besteht aus einer mittels des Antriebs getriebenen Walze mit wenigstens zwei in radialer Richtung von der Walze aufragenden, zueinander beabstandeten Scheiben. Der Stator ist durch einen Hohlzylinder gebildet, dessen Innenfläche sich nahezu bis zu den Scheiben des Rotors erstreckt oder leicht in den zwischen den Scheiben bestehenden Zwischenraum hineinragt. Zudem ragt von der Innenfläche des den Stator bildenden Hohlzylinders eine mit der Anzahl der Scheiben des Rotors korrespondierende Anzahl von Ringen auf, wobei jeweils ein von der Innenfläche des Stators aufragender Ring in den von zwei Scheiben des Rotors gebildeten Abstand mittig hineinragt. Auf diese Weise sind durch zwei Scheiben des Rotors, die zwischen ihnen befindliche Außenfläche der den Rotor bildenden Walze und den in den Abstand der betreffenden Scheiben hineinragenden Ring des Stators jeweils zwei Rollgänge gebildet, welche nach radial außen durch den jeweiligen Abschnitt der Innenfläche des den Stator bildenden Hohlzylinders begrenzt sind. Auf jede Eintrittsöffnung eines Rollgangs einer in dieser Weise ausgebildeten Vorrichtung arbeitet eine Reißscheibe der Faseraufgabeeinrichtung.

Zur Erreichung eines hohen Durchsatzes beziehungsweise einer großen Produktionsmenge von nach dem Verfahren hergestellten Rollagglomeraten ist die zuletzt beschriebene Ausbildungsform so weitergebildet, dass sie eine Mehrzahl zueinander paralleler Rollgänge aufweist, wobei der von dem entsprechenden Antrieb getriebene Rotor mit einem Scheibenpaket in starrer Kopplung miteinander rotierender Scheiben ausgebildet ist. Gleichzeitig weist der zugehörige Stator eine mit der Zahl der Scheiben des Rotors korrespondierende Anzahl von der Innenfläche des ihn ausbildenden Hohlzylinders aufragende Anzahl von Ringen auf. Die Faseraufgabeeinrichtung ist mit einer der Zahl der Rollgänge entsprechenden Anzahl von Reißscheiben ausgestattet. Ihre Reißscheiben bilden mindestens ein auf mindestens einer durch einen separaten Antrieb getriebenen Welle angeordnetes Scheibenpaket aus. Die Scheiben des Rotors und die Reißscheiben der Faseraufgabeeinrichtung rotieren zueinander gegenläufig.

Gemäß einer bevorzugten Ausbildungsform umfasst die Faseraufgabeeinrichtung zwei Wellen mit darauf angeordneten Paketen von Reißscheiben, wobei die Reißscheiben derart angeordnet sind, dass die Reißscheiben der einen Welle mit den Reißscheiben der anderen Welle kämmen und wechselweise in die Eintrittsöffnungen einander benachbarter Rollgänge hineinragen. Die beiden Wellen der Faseraufgabeeinrichtung rotieren dabei gleichläufig, aber gegenläufig zu der Welle beziehungsweise Walze des den oder die Rollgänge ausbildenden Rotors. Durch die Aufteilung der Scheibenpakete mit den Reißscheiben auf zwei Wellen wird eine bessere Vorvereinzelung der Faserportionen erreicht und vermieden, dass die die Reißscheiben tragenden Wellen bei einer Mehrzahl schmaler und dicht aneinander liegender Rollgänge und der damit verbundenen großen Zahl erforderlicher Reißscheiben überlastet werden. Die Reißscheiben sind gemäß einer vorgesehen Ausbildung der Erfindung so gestaltet, dass die Reißzähne einander benachbarter Reißscheiben, bezogen auf den jeweiligen Umfang der Reißscheiben, geringfügig gegeneinander versetzt angeordnet sind. Es hat sich gezeigt, dass eine völlig zufällige Verteilung der Reißzähne auf den Reißscheiben unpraktikabel ist, da dann von einer Reißscheibe aus dem Vorrat herausgerissenes Fasermaterial unter Umständen von der benachbarten Reißscheibe wieder teilweise zurücktransportiert und damit von der Eintrittsöffnung des betreffenden Rollgangs entfernt wird. Insoweit wäre es theoretisch günstig, alle Zähne der einzelnen Reißscheiben jeweils auf gleicher Umfangsposition anzuordnen. Jedoch resultiert hieraus wiederum eine starke Belastung der die Reißscheiben tragenden Wellen der Faseraufgabeeinrichtung, so dass sich ein geringfügiger Versatz der Zähne um ca. 1 bis 2 mm von Scheibe zu Scheibe als zweckmäßig erwiesen hat.

Bei einer optional möglichen Gestaltung einer einen Rotor und einen Stator zur Ausbildung des beziehungsweise der Rollgänge aufweisenden Ausführungsform der erfindungsgemäßen Vorrichtung sind die Walze des Rotors und der Innenraum des ihn umgebenden, den Stator ausbildenden Hohlzylinders so zueinander angeordnet, dass der oder die zwischen ihnen ausgebildeten Rollgänge sich ausgehend von ihrer jeweiligen Eintrittsöffnung für das Fasermaterial hin zur Austrittsöffnung für die gebildeten Faseragglomerate in ihrem Querschnitt verjüngen. Dies kann zum Beispiel dadurch realisiert sein, dass der Stator mit einer variierenden Wandstärke ausgebildet ist und/oder eine von der Kreisform abweichende Querschnittsfläche aufweist. Möglich ist aber auch eine entsprechende Gestaltung des Stators. Hierdurch werden progressive Rollgänge ausgebildet, welche sich zum Ende hin verjüngen und dadurch eine höhere Verdichtung des Materials in den Agglomeraten begünstigen. Insoweit ist anzumerken, dass die Form beziehungsweise die Geometrie und die Dimensionierung der Rollgänge (Querschnittsfläche und Länge) in Abhängigkeit der gewünschten Größe und Porosität der Agglomerate festzulegen und dabei auch von der Art des eingesetzten Fasermaterials abhängig sind.

Für die Gestaltung des Vorlagetisches, insbesondere seiner den Faservorrat aufnehmenden Fläche beziehungsweise Platte, kommen unterschiedliche Möglichkeiten in Betracht. Gemäß einer praktikablen Ausführungsform weist die Platte des Vorlagetisches an der oder den von den Reißscheiben passierten Außenkanten eine Zahnung auf. Durch den die Platte mit dem darauf liegenden Faservorrat passierenden Zahn einer Reißscheibe und die an der betreffenden Kante des Vorlagetisches vorgesehene Zahnung wird dabei eine Portionierung des Fasermaterials unter Erhalt relativ konstanter Portionsgrößen wirkungsvoll unterstützt. Die jeweilige Portionsgröße ist in erster Linie abhängig von den Abmaßen des Reißzahns, insbesondere von dessen Erstreckung in bezüglich der Reißscheibe radialer Richtung und wird darüber hinaus aber bei in Faserwirrlage vorliegendem Fasermaterial außerdem durch die Faserlänge des auf dem Vorlagetisch vorgelegten Fasermaterials beeinflusst.

Entsprechend einer ähnlichen Ausbildungsform ist die den Faservorrat aufnehmende Platte des Vorlagetisches als eine Kammplatte ausgebildet. In die entsprechende Platte sind dabei von einer oder zwei von den Reißscheiben passierten Seiten der Platte mehrere, sich parallel zur Mitte erstreckende Schlitze ausgebildet, durch welche die Reißscheiben kämmen. Schließlich ist es auch noch möglich, die eigentliche Auflagefläche der Platte des Vorlagetisches mit Durchbrüchen zu versehen, durch welche jeweils ein Umfangsabschnitt einer rotierenden Reißscheibe hindurch läuft.

Die Erfindung ist vorteilhaft dadurch weitergebildet, dass die den oder die Rollgänge begrenzenden Flächen zur Vergrößerung des auf das Fasermaterial wirkenden Reibschlusses mit einem dazu geeigneten Belag oder einer entsprechenden Profilierung versehen sind.

Nachfolgend soll die Erfindung anhand eines Ausführungsbeispiels nochmals näher erläutert werden. In den zugehörigen Zeichnungen zeigen:
- Fig. 1:: eine mögliche Ausbildungsform der erfindungsgemäßen Vorrichtung in räumlicher Darstellung,
- Fig. 2:: die aus dem Rotor und dem Stator gebildete Einheit zur Verdichtung des Fasermaterials als Teil der Vorrichtung nach Fig. 1,
- Fig. 3:: den Rotor der Einheit nach Fig. 2,
- Fig. 4:: Statorteile der Einheit nach Fig. 2,
- Fig.5:: die Faseraufgabeeinrichtung der Vorrichtung nach Fig. 1 in einer Draufsicht,
- Fig. 6:: eine Reißscheibe der Faseraufgabeeinrichtung nach Fig. 5,
- Fig. 7:: die schematische Darstellung eines progressiven Rollgangs.

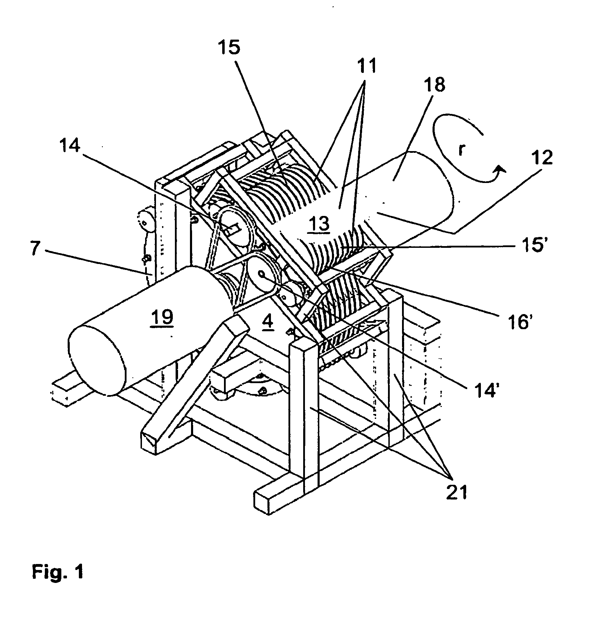

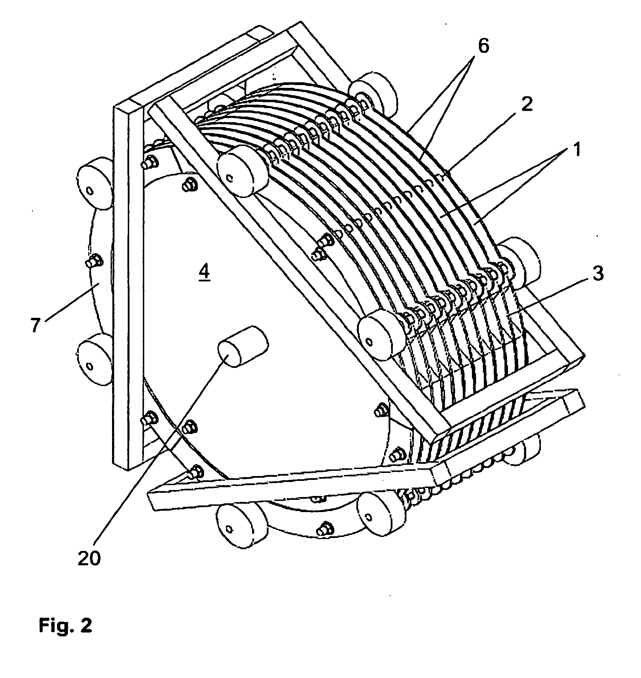

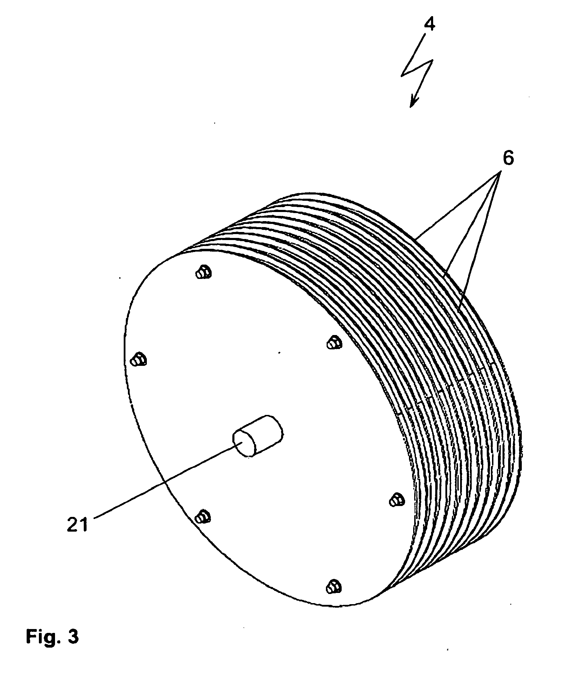

Die Fig. 1 zeigt eine mögliche Ausbildungsform der erfindungsgemäßen Vorrichtung in einer räumlichen Darstellung in der Gesamtansicht. Die Vorrichtung, welche nachfolgend anhand der Fig. 1 und 2 erläutert werden soll, ist durch eine sie tragende Rahmenkonstruktion 21 aufgenommen und gehalten. Sie besteht im Wesentlichen aus dem in den Fig. 2 im Detail besser zu erkenneden Verdichter und der Faseraufgabeeinrichtung 11, über welche dem Verdichter Portionen von Fasermaterial zur Erzeugung der Agglomerate zugeführt werden. Der Verdichter umfasst mehrere, nebeneinander angeordnete, kreisringförmige Rollgänge 1, an welche die Faserportionen über jeweils eine Eintrittsöffnung 2 durch die Faseraufgabeeinrichtung 11 übergeben werden. Die Faserportionen werden durch sich relativ zueinander bewegende Begrenzungsflächen der Rollgänge 1 durch die Rollgänge 1 hindurch transportiert und aufgrund der dabei gegebenen Walkwirkung verdichtet. Die sich auf diese Weise bildenden Faseragglomerate verlassen die Rollgänge 1 durch jeweils eine Austrittsöffnung 3 (siehe hierzu Fig. 2), wobei sie gegebenenfalls aus dem Rollgang 1 lediglich aufgrund des Wirkens der Schwerkraft herausfallen. Der Verdichter beziehungsweise dessen Rollgänge 1 sind durch einen von einem Antrieb 18 getriebenen Rotor 4 und einem diesen Rotor 4 umgebenden Stator 7 gebildet, wobei der Rotor 4 in der räumlichen Darstellung durch den vergleichbar einem Hohlzylinder ausgebildeten Stator 7 weitgehend verdeckt ist. Seine Ausbildung ist daher nochmals in der Fig. 3 dargestellt.

Die Faseraufgabeeinrichtung 11 besteht aus einem Vorlagetisch 12 mit einer Auflagefläche 13 für einen Faservorrat, mehreren in dem gezeigten Beispiel in Form von Scheibenpaketen auf zwei Wellen 14, 14' angeordneten Reißscheiben 15, 15' und einem die Wellen 14, 14' mit den darauf angeordneten Scheibenpaketen treibenden Antrieb 19. Die die Auflagefläche 13 für den Faservorrat ausbildende Platte des Vorlagetisches 12 ist an ihrer, von den Reißscheiben 15, 15' passierten äußeren Längskante gezahnt (in der Figur nicht erkennbar), so dass aus einem auf ihr liegenden Faservorrat durch die Reißzähne 16, 16' der dicht an dieser Kante vorbei geführten Reißscheiben 15, 15' jeweils eine Portion Fasermaterials herausgerissen und an beziehungsweise in den Rollgang 1 über dessen Eintrittsöffnung 2 übergeben wird. Durch die Aufteilung der Reißscheiben 15, 15' zu zwei, auf zwei Wellen 14, 14' angeordneten Scheibenpaketen wird eine bessere Vorvereinzelung der Faserportionen erreicht. Zudem wird gleichzeitig einer Überlastung der die Reißscheiben 15, 15' tragenden Wellen 14, 14' vorgebeugt. Die Wellen 14, 14' werden durch den zugehörigen Motor 19 vorzugsweise über eine Kette getrieben. Die getrennte Anordnung eines Antriebs 18 für den Verdichter und eines weiteren Antriebs 19 für die Faseraufgabeeinrichtung 11 vermeidet einerseits ebenfalls Überlastungen eines der Antriebe 18, 19 und ermöglicht es andererseits auf einfache Weise die Rotationsgeschwindigkeit der Reißscheiben 15, 15' in Anpassung an das Fasermaterial und die Größe der aus diesem jeweils herauszureißenden Portionen unabhängig einzustellen. Insbesondere letzteres kann aber selbstverständlich auch bei Verwendung nur eines Antriebs mittels eines Getriebes erreicht werden. Die Platte des Vorlagetisches 12 kann abweichend von dem in der Figur gezeigten Beispiel an der Kante, an welcher die Reißscheiben 15, 15' vorbeilaufen, auch eine Kammstruktur mit in Richtung der Plattenmitte verlaufenden parallelen Schlitzen aufweisen, durch welche die Reißscheiben 15, 15' mit den auf ihnen angeordneten Reißzähnen 16, 16' hindurch gleiten.

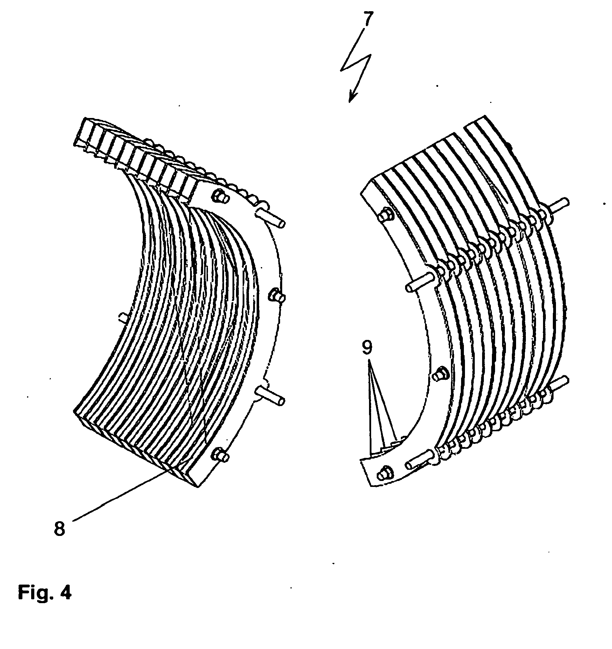

Die Fig. 2 zeigt nochmals den Verdichter mit Teilen des Rahmens 21 der Vorrichtung. Der Verdichter besteht aus einem Rotor 4 und einem Stator 7. Dabei ist der Rotor 4, wie auch nochmals in der Fig. 3 verdeutlicht, aus einer Mehrzahl zueinander beabstandeter, auf einer, von dem Antrieb 18 (siehe Fig. 1) über eine Welle 20 getriebenen Walze 5 angeordneter Scheiben 6 ausgebildet. Zwischen zwei Scheiben 6 sind jeweils zwei Rollgänge 1 ausgebildet. Die Rollgänge 1 werden dadurch gebildet, dass der Rotor 4 mit dem Stator 7 umgeben wird, für welchen eine Ausbildungsform durch Fig. 4 verdeutlicht ist. In dem gezeigten Beispiel besteht der Stator 7 aus drei Segmenten (die Fig. 4 zeigt zwei der Segmente) eines Hohlzylinders, welche um den Rotor 4 herum zusammengeführt werden. Hierbei ragen an der Innenfläche 8 des den Stator 7 bildenden Hohlzylinders Ringe 9 auf und in die zwischen den Scheiben 6 des Rotors 4 gebildeten Zwischenräume 10 hinein, so dass sie jeden dieser Zwischenräume 10 in zwei Rollgänge 1 aufteilen. Die den Ringen 9 des Stators 7 benachbarten Innenflächenbereiche 8 des ihn ausbildenden Hohlzylinders ragen in radialer Richtung bis an die Scheiben 6 des Rotors 4 heran oder leicht in die zwischen ihnen bestehenden Zwischenräume hinein. Durch die Bewegung des Rotors 4 in dem Stator 7 wird in den solchermaßen gebildeten Rollgängen 1 das Fasermaterial aufgrund der entstehenden Walkwirkung verdichtet. Die Walkwirkung kann dabei durch eine Beschichtung oder Profilierung der die Rollgänge 1 begrenzenden Flächen des Rotors 4 und des Stators 7 begünstigt werden.

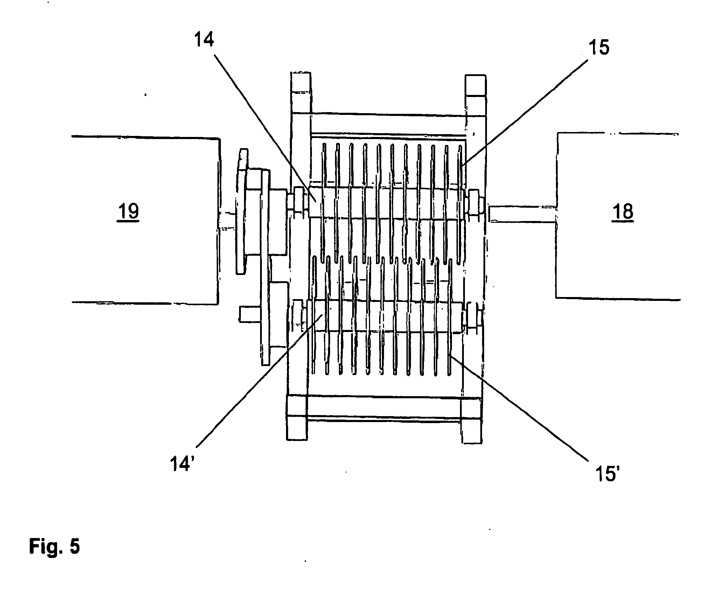

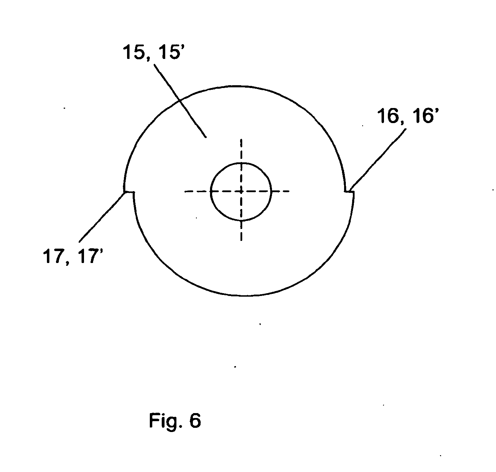

Die Faseraufgabeeinrichtung 11 der Vorrichtung gemäß Fig. 1 ist in der Fig. 5 nochmals in einer Draufsicht gezeigt. Sie besteht, wie schon ausgeführt, aus dem Vorlagetisch 12 für den Faservorrat und einer mit der Anzahl der Rollgänge 1 des Verdichters korrespondierenden Anzahl von Reißscheiben 15, 15', welche vorliegend als Scheibenpakete auf zwei Wellen 14, 14' angeordnet sind. Die vorgenannten Wellen 14, 14' werden durch einen zugehörigen Antrieb 19 getrieben. Aus der Darstellung ist gut erkennbar, dass die Reißscheiben 15 15' der beiden Scheibenpakete zueinander im Wechsel angeordnet sind, das heißt bezüglich benachbarter Rollgänge 1 des Verdichters im Wechsel auf deren Eintrittsöffnungen 2 für das Fasermaterial arbeiten. Die Reißscheiben 15, 15' beider Scheibenpakete rotieren ineinander kämmend und zueinander gleichläufig, jedoch gegenläufig zu den die Rollgänge 1 begrenzenden Scheiben 6 des Rotors. Jede der Reisscheiben 15, 15', der beiden in der Fig. 5 gezeigten Scheibenpakete, ist dabei entsprechend Fig. 6 ausgebildet. Das heißt, die Reißscheiben 15, 15' weisen bei der hier beispielhaft erläuterten Ausbildungsform auf ihrem Außenumfang zwei einander gegenüberliegende, in radialer Scheibenrichtung aufragende Reißzähne 16, 16', 17, 17' auf. Dabei sind die Reißscheiben 15, 15' der in der Fig. 5 gezeigten Scheibenpakete auf den zugehörigen Wellen 14, 14' derart angeordnet, dass sie, bezogen auf jeweils eine Welle 14, 14', von Reißscheibe 15, 15' zu Reißscheibe 15, 15' einen leichten Versatz von 1 bis 2 mm auf dem Scheibenumfang aufweisen.

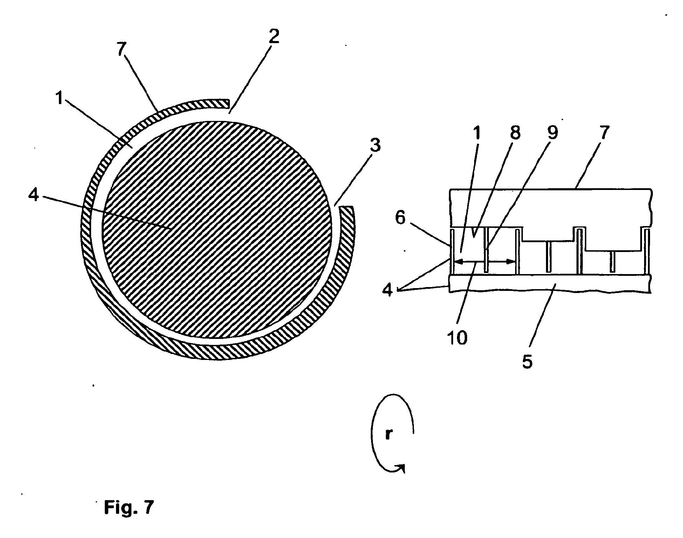

Die Fig. 7 zeigt einen Schnitt durch einen progressiven Rollgang 1 in einer schematischen Darstellung. Der entsprechende Rollgang 1 ist derart gestaltet, dass er sich ausgehend von der Eintrittsöffnung 2 für das Fasermaterial hin zur Austrittsöffnung 3 für die Agglomerate verjüngt. Im rechten Teil der Abbildung sind dabei jeweils die Querschnitte zweier benachbarter Rollgänge 1 gezeigt, wie sie sich in ihrem Verlauf von der Eintrittsöffnung zur Austrittsöffnung verändern. Die schematische Darstellung zeigt dabei eigentlich aufeinander folgende Abschnitte des Rollgangs 1 nebeneinander. Gut zu erkennen ist in der schematischen Darstellung auch die Teilung des zwischen zwei Scheiben 6 des Rotors 4 bestehenden Raumes in zwei Rollgänge 1 durch die in diesen Raum hineinragenden Innenringe 9 des Stators 7. Es ist ferner zu erkennen, dass, insbesondere auch im Hinblick auf die angesprochene Verjüngung beziehungsweise die progressive Ausbildung des Rollgangs 1, die Innenfläche 8 des Stators 7 teilweise in den zwischen zwei Scheiben 6 des Rotors gebildeten Zwischenraum hineinragen.

### Liste der verwendeten Bezugszeichen

- 1: Rollgang
- 2: Eintrittsöffnung
- 3: Austrittsöffnung
- 4: Rotor
- 5: Walze
- 6: Scheibe
- 7: Stator
- 8: Innenfläche
- 9: Ring
- 10: Abstand
- 11: Faseraufgabeeinrichtung
- 12: Vorlagetisch
- 13: Auflagefläche
- 14, 14': Welle
- 15, 15': Reißscheibe
- 16, 16': Mitnahmemittel; Reißzahn
- 17, 17': Mitnahmemittel; Reißzahn
- 18: Antrieb
- 19: Antrieb
- 20: Stutzen, Welle
- 21: Rahmenkonstruktion

## Patentansprüche

1. Verfahren zur kontinuierlichen Herstellung von Faseragglomeraten, bei welchem zur Herstellung eines Agglomerats eine Portion des Fasermaterials in einen, abgesehen von mindestens einer Eintrittsöffnung (2) und mindestens einer Austrittsöffnung (3), allseitig geschlossen kreisringförmigen Rollgang (1) eingebracht, aufgrund einer von einander gegenüberliegenden, den Rollgang (1) begrenzenden Flächen zueinander vollzogenen Relativbewegung durch den Rollgang (1) transportiert, dabei verdichtet und aus einer Austrittsöffnung (3) des Rollgangs (1) als Faseragglomerat ausgetragen wird, **dadurch gekennzeichnet, dass** die Portionierung des Fasermaterials durch das Herausreißen einer Menge von Fasern aus einem Vorrat des Fasermaterials erfolgt, wobei jeder Eintrittsöffnung (2) des aus den sich permanent zueinander bewegenden Flächen gebildeten Rollgangs (1) ein Vorrat des Fasermaterials auf einem Vorlagetisch (12) vorgelegt und von wiederholt durch den Vorrat bewegten Mitnahmemitteln (16, 16', 17, 17') einer dazu ausgebildeten Reißeinrichtung (15, 15', 16, 16', 17, 17') fortlaufend Portionen aus dem Vorrat herausgerissen und in den Rollgang (1) abgegeben werden.

2. Verfahren nach Anspruch 1, **dadurch gekennzeichnet, dass** die Portionen aus dem Vorlagetisch (12) ständig zugeführten Karden des Fasermaterials herausgerissen werden, wobei die Fasern in den Karden quer zur Rollgangsrichtung (r) ausgerichtet sind.

3. Verfahren nach Anspruch 1, **dadurch gekennzeichnet, dass** die Portionen aus dem Vorlagetisch (12) ständig zugeführten Ballen von in Wirrlage vorliegenden Fasern herausgerissen werden.

4. Verfahren nach einem der Ansprüche 1 bis 3, **dadurch gekennzeichnet, dass** das portionierte Fasermaterial vor dem Eintritt in den Rollgang (1) oder während des Rollprozesses innerhalb des Rollgangs (1) befeuchtet wird.

5. Verfahren nach einem der Ansprüche 1 bis 4, **dadurch gekennzeichnet, dass** dem portionierten Fasermaterial vor dem Eintritt in den Rollgang (1) oder während des Rollprozesses innerhalb des Rollgangs (1) Zusatzstoffe zudosiert werden.

6. Verfahren nach Anspruch 5, **dadurch gekennzeichnet, dass** als Zusatzstoffe Haftvermittler und/oder Flammhemmer und/oder Fungizide zudosiert werden.

7. Vorrichtung zur kontinuierlichen. Herstellung von Faseragglomeraten, bestehend aus mindestens einer Faseraufgabeeinrichtung (11) und einem Verdichter in Form wenigstens eines, abgesehen von mindestens einer Eintrittsöffnung (2) und mindestens einer Austrittsöffnung (3), allseitig von Begrenzungsflächen eingefassten kreisringförmigen Rollgangs (1) in welchem Portionen des Fasermaterials durch die Walkwirkung einander gegen über liegender und mittels eines Antriebs (18) zueinander relativ bewegter Begrenzungsflächen des Rollgangs (1) jeweils zu einem Faseragglomerat verdichtet werden können, **dadurch gekennzeichnet, dass** die Faseraufgabeeinrichtung (11) aus einem vor einer Eintrittsöffnung (2) eines oder mehrerer Rollgänge (1) angeordneten Vorlagetisch (12) mit einer Auflagefläche (13) für einen Faservorrat und mindestens einer, von dem Antrieb (18) für den oder die Rollgänge (1) oder von einem separaten Antrieb (19) getriebenen rotierenden Reißscheibe (15, 15') besteht, wobei die mindestens eine Reißscheibe (15, 15') als eine Scheibe mit mindestens einem an ihrem Außenumfang aufragenden Reißzahn (16, 16', 17, 17') ausgebildet ist, welcher bei der Rotation der mindestens einen Reißscheibe (15, 15') durch über den Vorlagetisch (12) hinausragende Fasern des Vorrats kämmt oder sich über mindestens eine an dem Vorlagetisch für die Reißscheibe (15, 15') ausgebildete Ausnehmung durch auf dieser Ausnehmung liegende Fasern des Vorrats bewegt und wobei die mindestens eine Reißscheibe (15, 15') so angeordnet ist, dass in einer Arbeitstellung der Vorrichtung ein Segment der Reißscheibe (15, 15') in die ihr zugeordnete Eintrittsöffnung (2) eines Rollgangs (1) hineinragt und die von dem mindestens einem Reißzahn (16, 16', 17, 17') der Reißscheibe (15, 15') während ihrer Rotation beim Passieren des Vorlage tisches (12) mit genommene Faserportion beim passieren der Eintrittsöffnung (2) des betreffen den Rollgangs (1) in diesen Rollgang (1) abgegehen werden kann.

8. Vorrichtung nach Anspruch 7, **dadurch gekennzeichnet, dass** der mindestens eine auf dem Außenumfang der Reißscheibe (15, 15') angeordnete Reißzahn (16, 16', 17, 17') bezüglich der Reißscheibe (15, 15') in radialer Richtung von dieser aufragt.

9. Vorrichtung nach Anspruch 7 oder 8 mit mindestens einem Rollgang (1) und mit einer Faseraufgabeeinrichtung (11), **dadurch gekennzeichnet, dass** der mindestens eine Rollgang (1) durch einen sich in einem Stator (7) bewegenden Rotor (4) gebildet ist und dass der Rotor (7) aus einer mittels des Antriebs (18) getriebenen Walze (5) mit wenigstens zwei in radialer Richtung aufragenden zueinander beabstandeten Scheiben (6) besteht und der Stator (7) durch einen holzylindrischen Körper gebildet ist, dessen Innenfläche (8) sich nahezu bis zu den Scheiben (6) des Rotors (4) erstreckt oder leicht in den zwischen den Scheiben (6) bestehenden Zwischenraum (10) hineinragt, wobei die Innenfläche (8) des den Stator (7) bildenden Hohlkörpers durch eine mit der Anzahl der Scheiben (6) des Rotors (4) korrespondierende Anzahl von ihr aufragender oder sie durchragender Ringe (9) segmentiert ist und je einer dieser Ringe (9) des Stators (7) in den von zwei Scheiben (6) des Rotors (4) gebildeten Zwischenraum (10) mittig hineinragt, so dass durch zwei Scheiben (6) des Rotors (4), der zwischen ihnen befindlichen Außenfläche der den Rotor bildenden Walze (5) und dem in den Zwischenraum (10) zwischen den betreffenden Scheiben (6) hineinragenden Ring (9) des Stators (7) jeweils zwei Rollgänge (1) gebildet sind, welche nach radial außen durch den jeweiligen Abschnitt der Innenfläche (8) des den Stator (7) bildenden Hohlkörpers begrenzt sind und wobei auf jede Eintrittsöffnung (2) eines Rollgangs (1) eine Reißscheibe (15, 15') der Faseraufgabeeinrichtung (11) arbeitet.

10. Vorrichtung nach Anspruch 9, **dadurch gekennzeichnet, dass** diese eine Mehrzahl zueinander paralleler Rollgänge (1) aufweist, wobei der von dem Antrieb (18) getriebene Rotor (4) mit einem Scheibenpaket von in starrer Kopplung miteinander rotierenden Scheiben (6) und der Stator (7) mit einer korrespondierenden Anzahl die Innenfläche (8) des Hohlkörpers segmentierender Ringe (9) ausgebildet ist und die Faseraufgabeeinrichtung (11) eine der Zahl der Rollgänge (1) entsprechende Anzahl von Reißscheiben (15, 15') aufweist, welche mindestens ein, auf mindestens einer durch einen separaten Antrieb (19) getriebenen Welle (14, 14') angeordnetes Scheibenpaket ausbilden und wobei die Scheiben (6) des Rotors (4) und die Reißscheiben (15, 15') der Faseraufgabeeinrichtung (11) zueinander gegenläufig rotieren.

11. Vorrichtung nach Anspruch 10, **dadurch gekennzeichnet, dass** die Faseraufgabeeinrichtung (11) zwei Wellen (14, 14') umfasst auf denen je ein Scheibenpaket mit Reißschieben (15, 15') derart angeordnet ist, dass die Reißscheiben (15) der einen Welle (14) mit den Reißscheiben (15') der anderen Welle (14') kämmen und wechselweise in die Eintrittsöffnungen (2) einander benachbarter Rollgänge (1) hineinragen, wobei die beiden Wellen (14, 14') der Faseraufgabeeinrichtung (11) gegenläufig zu der Walze (5) des Rotors (4) rotieren.

12. Vorrichtung nach Anspruch 9 oder 10, **dadurch gekennzeichnet, dass** die Reißzähne (16, 16') von Reißscheibe (15, 15') zu Reißscheibe (15, 15') eines auf einer Welle (14, 14') angeordneten Scheibenpakets in einem geringfügigen Versatz zueinander angeordnet sind.

13. Vorrichtung nach einem der Ansprüche 9 bis 12, **dadurch gekennzeichnet, dass** die Walze (5) des Rotors (4) und der Innenraum des ihn umgebenden, den Stator (7) ausbildenden Hohlzylinders so geformt und/oder zu einander angeordnet sind, dass der oder die zwischen ihnen ausgebildeten Rollgänge (1) sich in ihrem Verlauf von der Eintrittsöffnung (2) für das Fasermaterial zur Austrittsöffnung (3) für die gebildeten Faseragglomerate in ihrem Querschnitt verjüngen.

14. Vorrichtung nach einem der Ansprüche 7 bis 13, **dadurch gekennzeichnet, dass** die den Faservorrat aufnehmende Auflagefläche (13) des Vorlagetisches (12) durch eine, an ein oder zwei von den Reißscheiben (15, 15') passierten Außenkanten gezahnte Platte gebildet ist.

15. Vorrichtung nach einem der Ansprüche 7 bis 13, **dadurch gekennzeichnet, dass** die den Faservorrat aufnehmende Auflagefläche (13) des Vorlagetisches (12) durch eine Kammplatte gebildet ist, welche mehrere, sich von einer oder zwei Seiten zur Mitte erstreckende, parallel angeordnete und von den Reißscheiben (15, 15') der Faseraufgabeeinrichtung passierte Schlitze aufweist.

16. Vorrichtung nach einem der Ansprüche 7 bis 13, **dadurch gekennzeichnet, dass** der Vorlagetisch (12) eine den Faservorrat aufnehmende Platte mit mehreren parallel angeordneten, von den Reißscheiben (15, 15') der Faseraufgabeeinrichtung passierten Durchbrüchen aufweist.

17. Vorrichtung nach einem der Ansprüche 7 bis 16, **dadurch gekennzeichnet, dass** mindestens eine, einen jeweiligen Rollgang (1) begrenzende Fläche mit einem, den Reibschluss mit dem den Rollgang (1) passierenden Fasermaterial vergrößernden Belag versehen ist.

18. Vorrichtung nach einem der Ansprüche 7 bis 17, **dadurch gekennzeichnet, dass** mindestens eine, einen jeweiligen Rollgang (1) begrenzende Fläche mit einer, den Reibschluss mit dem den Rollgang (1) passierenden Fasermaterial vergrößernden Profilierung versehen ist.

## Claims

1. A method for the continuous production of fibre agglomerates, in which to produce an agglomerate a portion of the fibrous material is introduced into a circular ring-shaped roller bed (1) closed on all sides apart from at least one inlet orifice (2) and at least one outlet orifice (3), conveyed through the roller bed (1) by means of movement relative to one another performed by mutually opposing surfaces defining the roller bed (1), compressed in the process and delivered out of an outlet orifice (3) of the roller bed (1) as a fibre agglomerate, **characterised in that** portioning of the fibrous material proceeds by pulling a quantity of fibres out of a supply of the fibrous material, a supply of the fibrous material initially being placed on a supply table (12) for each inlet orifice (2) of the roller bed (1) formed from the surfaces moving continuously relative to one another and portions being pulled continuously from the supply and delivered into the roller bed (1) by catching means (16, 16', 17, 17'), moved repeatedly through the supply, of a pulling means (15, 15', 16, 16', 17, 17') provided for this purpose.

2. A method according to claim 1, **characterised in that** the portions are pulled out of cards of the fibrous material continuously fed from the supply table (12), the fibres in the cards being oriented transversely of the roller bed direction (r).

3. A method according to claim 1, **characterised in that** the portions are pulled out of bales, continuously fed to the supply table (12), of fibres present in random orientation.

4. A method according to any one of claims 1 to 3, **characterised in that** the portioned fibrous material is moistened prior to entry into the roller bed (1) or during the rolling process inside the roller bed (1).

5. A method according to any one of claims 1 to 4, **characterised in that** additives are apportioned into the portioned fibrous material prior to entry into the roller bed (1) or during the rolling process inside the roller bed (1).

6. A method according to claim 5, **characterised in that** the apportioned additives are adhesion promoters and/or flame retardants and/or fungicides.

7. A device for the continuous production of fibre agglomerates, consisting of at least one fibre feed means (11) and a compressor in the form of at least one circular ring-shaped roller bed (1) bordered on all sides by defining surfaces apart from at least one inlet orifice (2) and at least one outlet orifice (3), in which roller bed portions of the fibrous material may be compressed by the milling effect of mutually opposing defining surfaces of the roller bed (1) moved relative to one another by means of a drive (18) in each case to yield a fibre agglomerate, **characterised in that** the fibre feed means (11) consists of a supply table (12) arranged in front of an inlet orifice (2) of one or more roller beds (1) and having a bearing surface (13) for a fibre supply and at least one rotating pulling disc (15, 15') driven by the drive (18) for the roller bed(s) (1) or by a separate drive (19), the at least one pulling disc (15, 15') taking the form of a disc with at least one pulling tooth (16, 16', 17, 17') projecting at its outer circumference, which pulling tooth combs on rotation of the at least one pulling disc (15, 15') through fibres of the supply projecting beyond the supply table (12) or is moved over at least one recess formed in the supply table for the pulling disc (15, 15') through fibres of the supply lying on this recess and the at least one pulling disc (15, 15') being arranged such that, when the device is in a working position, a segment of the pulling disc (15, 15') projects into the inlet orifice (2) associated therewith of a roller bed (1) and the fibre portion caught by the at least one pulling tooth (16, 16', 17, 17') of the pulling disc (15, 15') during rotation thereof on passage over the supply table (12) may be delivered into the relevant roller bed (1) on passage over the inlet orifice (2) of this roller bed (1).

8. A device according to claim 7, **characterised in that** the at least one pulling tooth (16, 16', 17, 17') arranged on the outer circumference of the pulling disc (15, 15') projects radially therefrom relative to the pulling disc (15, 15').

9. A device according to claim 7 or claim 8 with at least one roller bed (1) and with a fibre feed means (11), **characterised in that** the at least one roller bed (1) is formed by a rotor (4) moving in a stator (7) and **in that** the rotor (7) consists of a roller (5) driven by means of the drive (18) with at least two radially projecting, mutually spaced discs (6) and the stator (7) is formed by a hollow-cylindrical body, whose inner surface (8) extends almost as far as the discs (6) of the rotor (4) or projects slightly into the space (10) between the discs (6), the inner surface (8) of the hollow body forming the stator (7) being segmented by a number of rings (9) projecting therefrom or therethrough corresponding to the number of the discs (6) of the rotor (4) and each one of these rings (9) of the stator (7) projecting centrally into the space (10) formed by two discs (6) of the rotor (4), such that in each case two roller beds (1) are formed by two discs (6) of the rotor (4), the outer surface, located therebetween, of the roller (5) forming the rotor and the ring (9) of the stator (7) projecting into the space (10) between the relevant discs (6), said roller beds being defined radially outwardly by the respective portion of the inner surface (8) of the hollow body forming the stator (7) and a pulling disc (15, 15') of the fibre feed means (11) operating at each inlet orifice (2) of a roller bed (1).

10. A device according to claim 9, **characterised in that** it comprises a plurality of mutually parallel roller beds (1), wherein the rotor (4) driven by the drive (18) is constructed with a disc stack of discs (6) coupled rigidly together for rotation and the stator (7) is constructed with a corresponding number of rings (9) segmenting the inner surface (8) of the hollow body and the fibre feed means (11) comprises a number of pulling discs (15, 15') corresponding to the number of roller beds (1), said discs forming at least one disc stack arranged on at least one shaft (14, 14') driven by a separate drive (19), and wherein the discs (6) of the rotor (4) and the pulling discs (15, 15') of the fibre feed means (11) are mutually counterrotating.

11. A device according to claim 10, **characterised in that** the fibre feed means (11) comprises two shafts (14, 14'), on each of which a disc stack with pulling discs (15, 15') is arranged in such a way that the pulling discs (15) of the one shaft (14) mesh with the pulling discs (15') of the other shaft (14') and alternately project into the inlet orifices (2) of adjoining roller beds (1), wherein the two shafts (14, 14') of the fibre feed means (11) counterrotate relative to the roller (5) of the rotor (4).

12. A device according to claim 9 or claim 10, **characterised in that**, from pulling disc (15, 15') to pulling disc (15, 15') of a disc stack arranged on a shaft (14, 14'), the pulling teeth (16, 16') are arranged with slight offset relative to one another.

13. A device according to any one of claims 9 to 12, **characterised in that** the roller (5) of the rotor (4) and the interior of the hollow cylinder surrounding it and forming the stator (7) are shaped and/or arranged relative to one another in such a way that the roller bed(s) (1) formed therebetween taper in cross-section in their course from the inlet orifice (2) for the fibrous material to the outlet orifice (3) for the fibre agglomerates formed.

14. A device according to any one of claims 7 to 13, **characterised in that** the bearing surface (13) of the supply table (12) accommodating the fibre supply is formed of a plate toothed on one or two external edges passed over by the pulling discs (15, 15').

15. A device according to any one of claims 7 to 13, **characterised in that** the bearing surface (13) of the supply table (12) accommodating the fibre supply is formed of a comb plate, which comprises a plurality of slots arranged in parallel and extending from one or two sides to the middle and passed over by the pulling discs (15, 15') of the fibre feed means.

16. A device according to any one of claims 7 to 13, **characterised in that** the supply table (12) comprises a plate accommodating the fibre supply and having a plurality of openings arranged in parallel and passed over by the pulling discs (15, 15') of the fibre feed means.

17. A device according to any one of claims 7 to 16, **characterised in that** at least one surface defining a respective roller bed (1) is provided with a covering increasing frictional engagement with the fibrous material passing over the roller bed (1).

18. A device according to any one of claims 7 to 17, **characterised in that** at least one surface defining a respective roller bed (1) is provided with profiling increasing frictional engagement with the fibrous material passing over the roller bed (1).

## Revendications

1. Procédé de fabrication en continu d'agglomérés de fibres, dans lequel, pour fabriquer un aggloméré, une portion du matériau de fibres est amenée dans un parcours de roulement (1) en forme d'anneau circulaire fermé de tous côtés à l'exception d'au moins une ouverture d'entrée (2) et d'au moins une ouverture de sortie (3), est transportée sur le parcours de roulement (1) suite au déplacement relatif que subissent l'une par rapport à l'autre des surfaces mutuellement opposées qui délimitent le parcours de roulement (1), est ainsi comprimée et est extraite sous la forme d'un aggloméré de fibres par une ouverture de sortie (3) du parcours de roulement (1),
**caractérisé en ce que** la formation des portions du matériau de fibres s'effectue en découpant une certaine quantité de fibres d'une réserve de matériau de fibres, une réserve de matériau de fibres étant prévue sur une table de réserve (12) devant chaque ouverture d'entrée (2) du parcours de roulement (1) formé par des surfaces qui se déplacent en permanence l'une par rapport à l'autre et **en ce que** des portions sont extraites en permanence de la réserve par des moyens d'entraînement (16, 16', 17, 17'), déplacés de manière répétée dans la réserve, d'un dispositif de découpe (15, 15', 16, 16', 17, 17') formé dans ce but, et sont délivrées dans le parcours de roulement (1).

2. Procédé selon la revendication 1, **caractérisé en ce que** les portions sont extraites dans des cardes de matériau de fibres amenés en permanence depuis la table de réserve (12), les fibres étant orientées dans les cardes transversalement par rapport à la direction (r) du parcours de roulement.

3. Procédé selon la revendication 1, **caractérisé en ce que** les portions sont extraites dans des balles, amenées en permanence depuis la table de réserve (12), de fibres orientées aléatoirement.

4. Procédé selon l'une des revendications 1 à 3, **caractérisé en ce que** le matériau de fibres découpé en portions est humidifié avant son entrée dans le parcours de roulement (1) ou pendant l'opération de roulement réalisée à l'intérieur du parcours de roulement (1).

5. Procédé selon l'une des revendications 1 à 4, **caractérisé en ce que** des additifs sont ajoutés au matériau de fibres découpé en portions avant son entrée dans le parcours de roulement (1) ou pendant l'opération de roulement qui a lieu à l'intérieur du parcours de roulement (1).

6. Procédé selon la revendication 5, **caractérisé en ce que** les additifs ajoutés sont des agents d'adhérence, des agents de retardement des flammes et/ou des fongicides.

7. Dispositif de fabrication en continu d'agglomérés de fibres, constitué d'au moins un dispositif (11) d'apport de fibres et d'un compacteur qui présente la forme d'au moins un parcours de roulement (1) en forme d'anneau circulaire entouré des deux côtés par des surfaces de délimitation à l'exception d'au moins une ouverture d'entrée (2) et d'au moins une ouverture de sortie (3), et dans lequel des portions de matériau de fibres peuvent être comprimées en un aggloméré de fibres par l'effet de foulonnage des surfaces du parcours de roulement (1) situées en face l'une de l'autre et déplacées l'une par rapport à l'autre au moyen d'un entraînement (18),
**caractérisé en ce que** le dispositif (11) d'apport de fibres est constitué d'une table de réserve (12) disposée en amont d'une ouverture d'entrée (2) d'un ou plusieurs parcours de roulement (1) et dotée d'une surface de pose (13) prévue pour une réserve de fibres et d'au moins un disque rotatif de découpe (15, 15') entraîné par l'entraînement (18) prévu pour le ou les parcours de roulement (1) ou par un entraînement (19) séparé, le ou les disques de découpe (15, 15') étant configuré(s) comme disque(s) doté(s) d'une ou plusieurs dents de découpe (16, 16', 17, 17') qui déborde(nt) de sa/leur périphérie extérieure et qui, lors de la rotation du ou des disques de découpe (15, 15'), s'engage(nt) entre des fibres de la réserve qui débordent au-delà de la table de réserve (12) ou se déplace(nt) à travers les fibres de la réserve placées sur au moins une découpe formée sur la table de réserve pour le disque de découpe (15, 15'), le ou les disques de découpe (15, 15') étant disposé(s) de telle sorte que lorsque le dispositif est en position de travail, un segment du disque de découpe (15, 15') s'enfonce dans l'ouverture d'entrée (2) qui lui est associée dans un parcours de roulement (1) et que la portion de fibres entraînée par la ou les dents de découpe (16, 16', 17, 17') du disque de découpe (15, 15') pendant sa rotation lorsqu'il traverse la table de réserve (12) peut être délivrée dans un parcours de roulement (1) lorsqu'elle passe par l'ouverture d'entrée (2) du parcours de roulement (1) concerné.

8. Dispositif selon la revendication 7, **caractérisé en ce que** la ou les dents de découpe (16, 16', 17, 17') disposées à la périphérie extérieure du disque de découpe (15, 15') débordent radialement du disque de découpe (15, 15').

9. Dispositif selon la revendication 7 ou 8, doté d'au moins un parcours de roulement (1) et d'un dispositif (11) d'apport de fibres, **caractérisé en ce que** le ou les parcours de roulement (1) est/sont formé(s) par un rotor (4) qui se déplace dans un stator (7), **en ce que** le rotor (4) est constitué d'un cylindre (5) entraîné au moyen d'un entraînement (18) et d'au moins deux disques (6) situés à distance l'un de l'autre et en débord dans la direction radiale, le stator (7) étant formé par un corps cylindrique creux dont la surface intérieure (8) s'étend presque jusqu'aux disques (6) du rotor (4) ou pénétre légèrement dans l'espace intermédiaire (10) existant entre les disques (6), la surface intérieure (8) du corps creux formant le stator (7) étant segmentée par des anneaux (9) qui en débordent ou le traversent et dont le nombre correspond au nombre de disques (6) du rotor (4), chacun de ces anneaux (9) du stator (7) pénétrant au milieu de l'espace intermédiaire (10) formé par deux disques (6) du rotor (4) de telle sorte que deux disques (6) du rotor (4), la surface extérieure, située entre eux, du cylindre (5) formant le rotor et l'anneau (9) du stator (7) qui pénètre dans l'espace intermédiaire (10) entre les disques (6) concernés forment deux parcours de roulement (1) qui sont délimités radialement vers l'extérieur par la partie de la surface intérieure (8) du corps creux qui forme le stator (7), un disque de découpe (15, 15') du dispositif (11) d'apport de fibres travaillant sur chaque ouverture d'entrée (2) d'un parcours de roulement (1).

10. Dispositif selon la revendication 9, **caractérisé en ce qu'**il présente plusieurs parcours de roulement (1) mutuellement parallèles, le rotor (4) entraîné par l'entraînement (18) étant configuré avec un paquet de disques (6) qui tournent en accouplement rigide les uns avec les autres et le stator (7) étant configuré avec un nombre correspondant d'anneaux (9) qui segmentent la surface intérieure (8) du corps creux, le dispositif (11) d'apport de fibres présentant des disques de découpe (15, 15') dont le nombre correspond au nombre des parcours de roulement (1) et qui forment au moins un paquet de disques disposé sur au moins un arbre (14, 14') entraîné par un entraînement (19) séparé, les disques (6) du rotor (4) et les disques de découpe (15, 15') du dispositif (11) d'apport de fibres tournant dans des sens opposés.

11. Dispositif selon la revendication 10, **caractérisé en ce que** le dispositif (11) d'apport de fibres comporte deux arbres (14, 14') sur chacun desquels est disposé un paquet de disques doté de disques de découpe (15, 15'), de telle sorte que les disques de découpe (15) d'un arbre (14) s'engagent entre les disques de découpe (15') de l'autre arbre (14') et pénètrent en alternance dans les ouvertures d'entrée (2) de parcours de roulement (1) voisins l'un de l'autre, les deux arbres (14, 14') du dispositif (11) d'apport de fibres tournant dans un sens opposé à celui du cylindre (5) du rotor (4).

12. Dispositif selon la revendication 9 ou 10, **caractérisé en ce que** les dents de découpe (16, 16') des disques de découpe (15, 15') sont disposées en léger décalage mutuel par rapport à celles des disques de découpe (15, 15') d'un paquet de disques disposé sur un arbre (14, 14').

13. Dispositif selon l'une des revendications 9 à 12, **caractérisé en ce que** le cylindre (5) du rotor (4) et l'espace intérieur du cylindre creux qui forme le stator (7) entourant ce dernier sont configurés et/ou disposés l'un par rapport à l'autre de telle sorte que la section transversale du ou des parcours de roulement (1) formé(s) entre eux se rétrécit entre l'ouverture d'entrée (2) prévue pour le matériau de fibres et l'ouverture de sortie (3) prévue pour l'aggloméré de fibres formé.

14. Dispositif selon l'une des revendications 7 à 13, **caractérisé en ce que** la surface de pose (13), qui reprend la réserve de fibres, de la table de réserve (12) est formée par une plaque dentée dont les bords extérieurs sont traversés par un ou deux des disques de découpe (15, 15').

15. Dispositif selon l'une des revendications 7 à 13, **caractérisé en ce que** la surface de pose (13), qui reprend la réserve de fibres, de la table de réserve (12) est formée par une plaque de peigne qui présente plusieurs fentes qui s'étendent depuis un ou deux côtés jusqu'au milieu, disposées parallèlement et traversées par les disques de découpe (15, 15') du dispositif d'apport de fibres.

16. Dispositif selon l'une des revendications 7 à 13, **caractérisé en ce que** la table de réserve (12) présente une plaque qui reprend la réserve de fibres et qui est dotée de plusieurs perforations disposées en parallèle et traversées par les disques de découpe (15, 15') du dispositif d'apport de fibres.

17. Dispositif selon l'une des revendications 7 à 16, **caractérisé en ce qu'**au moins une surface qui délimite chaque parcours de roulement (1) est dotée d'une garniture qui renforce le frottement avec le matériau de fibres qui traverse le parcours de roulement (1).

18. Dispositif selon l'une des revendications 7 à 17, **caractérisé en ce qu'**au moins une surface qui délimite chaque parcours de roulement (1) est dotée d'une profilation qui renforce le frottement avec le matériau de fibres qui traverse le parcours de roulement (1).
